# EUROPÄISCHE PATENTSCHRIFT

(11) **EP 1 681 792 B1**
(45) Veröffentlichungstag und Bekanntmachung des Hinweises auf die Patenterteilung: **13.03.2013**
(21) Anmeldenummer: 05000846.5
(22) Anmeldetag: 17.01.2005
(51) Int. Cl.: H04L 1/18

(54) **Gesicherte Nachrichtenübertragung in einem Multi-Hop System**
Secure data transmission in a multi-hop system
Transmission de données sécurisée dans un système à bonds multiple

(43) Veröffentlichungstag der Anmeldung: 19.07.2006
(73) Patentinhaber: Nokia Siemens Networks GmbH & Co. KG, 81541 München (DE)
(72) Erfinder: Lott, Matthias, 82061 Neuried (DE)

(56) Entgegenhaltungen:
- WO-A-00/21231
- DE-A1- 10 227 852
- GB-A- 2 358 776
- US-A1- 2004 192 204

## Beschreibung

Die Erfindung betrifft Verfahren zur Übertragung von Nachrichten zwischen einer ersten und einer zweiten Funkstation über eine oder mehrere Weiterleitungs-Funkstationen, sowie Funkstationen zur Durchführung der Verfahren.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkeinrichtungen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von beispielsweise einigen hundert Metern im Vergleich zu üblichen Mobilfunkzellen klein. Beispiele verschiedener Standards für WLANs sind HiperLAN, DECT, IEEE 802.11, Bluetooth und WATM. Über die WLAN Funkzugangspunkte kann eine Anbindung an andere Kommunikationssysteme, so z.B. an das Internet erfolgen.

Funkstationen können nur dann direkt miteinander kommunizieren, wenn sie sich beide im Funkabdeckungsbereich der jeweils anderen Funkstation befinden. Ist eine direkte Kommunikation nicht möglich, so können Nachrichten zwischen diesen Funkstationen über andere Funkstationen, welche - indem sie die Nachrichten weiterleiten - als Relaisfunkstationen bzw. Repeater fungieren, übertragen werden. Eine derartige Nachrichtenweiterleitung kann, abhängig von der konkreten Ausgestaltung des Funkkommunikationssystems, sowohl von Teilnehmerstationen als auch von netzseitigen Funkstationen durchgeführt werden. Nachrichten können beispielsweise in einem WLAN zwischen einem Funkzugangspunkt und weit von dem Funkzugangspunkt entfernten Teilnehmerstationen weitergeleitet werden. Auch in einem Adhoc-Modus eines Funkkommunikationssystems können Teilnehmerfunkstationen über einen oder mehrere Sprünge (Hop bzw. Multi-Hop) miteinander kommunizieren, ohne dass vermittelnde Einrichtungen wie z.B. Basisstationen oder Funkzugangspunkte zwischengeschaltet werden, indem bei einer Nachrichtenübertragung von einer Teilnehmerstation an eine andere Teilnehmerstation außerhalb ihres Funkabdeckungsbereiches die Nachrichten von weiteren Teilnehmerstationen weitergeleitet werden.

Aus WO 00/21231 A ist ein verfahren zur Übertragung von Daten von einem Sender über ein zwischenspeicherndes Netzwerk hin zu einem Empfänger bekannt, welches im Anschluss an die erfolgreiche Übermittlung eines Datenpakets an das zwischenspeichernde Netzwerkelement eine positive Empfangsbestätigung an den Sender zurücksendet und nach erhalt der positiven Empfangsbestätigung die Nachricht aus einem Speicher des Senders löscht.

Der Erfindung liegt die Aufgabe zugrunde, Verfahren und Vorrichtungen zur Übertragung einer Nachricht über mehrere Sprünge aufzuzeigen.

Diese Aufgabe wird durch ein Verfahren mit den Merkmalen des Anspruchs 1, sowie durch Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Übertragen einer Nachricht per Funk von einer ersten Funkstation zu einer zweiten Funkstation über mehrere Sprünge wird die Nachricht von der ersten Funkstation über eine der zweiten Funkstation benachbarte Weiterleitungs-Funkstation an die zweite Funkstation übertragen. Erfindungsgemäß wird ein erstes ARQ-Verfahren eingesetzt zwischen jeweils der Sender-Funkstation und der Empfänger-Funkstation von einzelnen Sprüngen, bei welchem die jeweilige Sender-Funkstation die Nachricht speichert und nach dem Empfang einer von der jeweiligen Empfänger-Funkstation zu Zwecken des ersten ARQ-Verfahrens erzeugten Bestätigungsnachricht löscht. Weiterhin wird ein zweites ARQ-Verfahren eingesetzt zwischen der ersten Funkstation und der Weiterleitungs-Funkstation, bei welchem die erste Funkstation die Nachricht speichert und nach dem Empfang einer von der Weiterleitungs-Funkstation zu Zwecken des zweiten ARQ-Verfahrens erzeugten Bestätigungsnachricht löscht.

Bei den Funkstationen kann es sich jeweils um stationäre oder mobile netzseitige oder teilnehmerseitige Funkstationen handeln. Die Nachrichtenübertragung von der ersten Funkstation zu der zweiten Funkstation erfolgt zumindest über eine Weiterleitungs-Funkstation, welche die Nachricht direkt an die zweite Funkstation sendet. Es ist möglich, dass zwischen der ersten Funkstation und der der zweiten Funkstation benachbarten Weiterleitungs-Funkstation weitere Weiterleitungen durch eine oder mehrere weitere Weiterleitungs-Funkstationen erfolgen.

Im Rahmen der Erfindung werden zwei ARQ-Verfahren (ARQ: Automatic Repeat Request) eingesetzt. Hierbei kann es sich um grundsätzlich die gleichen ARQ-Verfahren handeln, welche jedoch von verschiedenen ARQ-Partnern durchgeführt werden. So handelt es sich bei dem ersten ARQ-Verfahren um ein ARQ-Verfahren, welches in Bezug auf einzelne Sprünge durchgeführt wird, während das zweite ARQ-Verfahren zwischen der ersten Funkstation und der der zweiten Funkstation benachbarten Weiterleitungs-Funkstation durchgeführt wird.

Es ist möglich, dass sich das erste und das zweite ARQ-Verfahren voneinander unterscheiden. Beispiele verschiedener ARQ-Verfahren sind Stop-and-Wait, Go-back-N und Selective-Repeat ARQ-Verfahren. Für das erste ARQ-Verfahren können insbesondere hybride ARQ-Verfahren eingesetzt werden. Hybride ARQ-Verfahren kombinieren ARQ und Vorwärtsfehlerkorrekturverfahren (FEC: Forward Error Correction) (hybride ARQ-Verfahren des Typs I), und können gegebenenfalls durch inkrementelle Redundanz die Effizienz steigern (hybride ARQ-Verfahren der Typen II und III). Verschiedene ARQ-Verfahren können sich z.B. in der Verwaltung der Sequenznummern unterscheiden, bei der Verwendung von Sende- und Empfangsfenstern, und bei der Speicherung und wiederholten Übertragung von fehlgeschlagenen Übertragungen. So benötigt beispielsweise ein Stop-and-Wait ARQ-Verfahren im Gegensatz zu einem Go-back-N ARQ-Verfahren und einem Selective-Repeat ARQ-Verfahren kein Sende- und Empfangsfenster, während ein Stop-and-Wait ARQ-Verfahren und ein Go-back-N ARQ-Verfahren im Gegensatz zu einem Selective-Repeat ARQ-Verfahren keine Warteschlangen am Empfänger benötigen.

Das erste ARQ-Verfahren kann insbesondere in Bezug auf jeden Sprung der Nachrichtenübertragung von der ersten Funkstation zu der zweiten Funkstation durchgeführt werden. Möglich ist, dass das erste ARQ-Verfahren in Bezug auf die verschiedenen Sprünge verschieden ausgestaltet ist, so dass für einen ersten Sprung ein erstes Single-Hop-ARQ-Verfahren verwendet wird, und für einen anderen Sprung ein zweites Single-Hop-ARQ-Verfahren. Gemeinsam ist den verschiedenen Ausgestaltungen des ersten ARQ-Verfahrens, dass es sich jeweils um ein Single-Hop-ARQ-Verfahren handelt. Das erste ARQ-Verfahren muss nicht in Bezug auf alle Sprünge der Nachrichtenübertragung zwischen der ersten und der zweiten Funkstation eingesetzt werden, so ist es insbesondere möglich, dass ein Single-Hop-ARQ-Verfahren lediglich auf dem Sprung zwischen der der zweiten Funkstation benachbarten Weiterleitungs-Funkstation und der zweiten Funkstation eingesetzt wird, während für die anderen Sprünge das erste ARQ-Verfahren nicht eingesetzt wird. Dies ist erweist sich dann als vorteilhaft, wenn die zweite Funkstation eine mobile Funkstation ist, während die erste Funkstation und die Weiterleitungs-Funkstation oder Weiterleitungs-Funkstationen stationär sind.

Beide ARQ-Verfahren verwenden Bestätigungsnachrichten, welche den korrekten Empfang einer Nachricht anzeigen. Der Empfänger der Bestätigungsnachricht löscht aufgrund des Empfangs der Bestätigungsnachricht die von ihm zuvor gesendete Nachricht aus seinem Speicher, da aufgrund des korrekten Empfangs der Nachricht keine erneute Versendung der Nachricht nötig ist. Weitere, bei ARQ-Verfahren übliche Verfahrensschritte können sowohl hinsichtlich des ersten als auch hinsichtlich des zweiten ARQ-Verfahrens durchgeführt werden, so zum Beispiel die Versendung einer negativen Bestätigungsnachricht, wodurch eine erneute Versendung einer Nachricht angefordert wird, oder das Verwerfen einer gespeicherten Nachricht nach Ablauf einer bestimmten Zeit.

Vorzugsweise unterscheiden sich die Bestätigungsnachrichten der beiden ARQ-Verfahren zumindest insofern, als die Bestätigungsnachricht des ersten ARQ-Verfahrens die erfolgreiche Nachrichtenübertragung über einen einzelnen Sprung anzeigt, während die Bestätigungsnachricht des zweiten ARQ-Verfahrens die erfolgreiche Nachrichtenübertragung zwischen der ersten und der zweiten Funkstation, d.h. die erfolgreiche Ende-zu-Ende-Übertragung, anzeigt. Eine Bestätigungsnachricht zu Zwecken des zweiten ARQ-Verfahrens wird von der der zweiten Funkstation benachbarten Weiterleitungs-Funkstation erzeugt und versendet, insbesondere leitet die der zweiten Funkstation benachbarte Weiterleitungs-Funkstation die Bestätigungsnachricht des zweiten ARQ-Verfahrens nicht lediglich weiter.

In Weiterbildung der Erfindung wird nach jeder einzelnen erfolgreichen Übertragung der Nachricht über einen Sprung von der jeweiligen Empfänger-Funkstation des Sprungs eine Bestätigungsnachricht zu Zwecken des ersten ARQ-Verfahrens erzeugt und zu der jeweiligen Sender-Funkstation des Sprungs gesendet. Weiterhin wird nach dem Empfang der zu Zwecken des ersten ARQ-Verfahrens von der zweiten Funkstation erzeugten und gesendeten Bestätigungsnachricht durch die Weiterleitungs-Funkstation von der Weiterleitungs-Funkstation eine Bestätigungsnachricht zu Zwecken des zweiten ARQ-Verfahrens erzeugt und gesendet. Somit existiert eine Kopplung der beiden ARQ-Verfahren, da der Empfang einer Bestätigungsnachricht des ersten ARQ-Verfahrens durch die der zweiten Funkstation benachbarte Weiterleitungs-Funkstation die Erzeugung einer Bestätigungsnachricht des zweiten ARQ-Verfahrens auslöst.

Einer Ausgestaltung der Erfindung gemäß wird die von der Weiterleitungs-Funkstation zu Zwecken des zweiten ARQ-Verfahrens erzeugte Bestätigungsnachricht von der Weiterleitungs-Funkstation an die erste Funkstation gesendet oder sie wird durch eine oder mehrere weitere Weiterleitungs-Funkstationen an die erste Funkstation weitergeleitet. Die von der der zweiten Funkstation benachbarten Weiterleitungs-Funkstation erzeugte Bestätigungsnachricht des zweiten ARQ-Verfahrens ist für die erste Funkstation bestimmt, die Übertragung von der der zweiten Funkstation benachbarten Weiterleitungs-Funkstation an die erste Funkstation kann je nach Ausgestaltung des Pfades zwischen der ersten und der zweiten Funkstation direkt oder gemäß diesem Pfad über eine oder mehrere weitere Weiterleitungs-Funkstationen erfolgen.

Bei einem weiteren Verfahren zum Übertragen einer Nachricht per Funk von einer zweiten Funkstation zu einer ersten Funkstation über mehrere Sprünge wird die Nachricht von der zweiten Funkstation über eine der zweiten Funkstation benachbarte Weiterleitungs-Funkstation an die erste Funkstation übertragen. Erfindungsgemäß wird ein erstes ARQ-Verfahren eingesetzt zwischen jeweils der Sender-Funkstation und der Empfänger-Funkstation von einzelnen Sprüngen, bei welchem die jeweilige Sender-Funkstation die Nachricht speichert und nach dem Empfang einer von der jeweiligen Empfänger-Funkstation zu Zwecken des ersten ARQ-Verfahrens erzeugten Bestätigungsnachricht löscht. Weiterhin wird ein zweites ARQ-Verfahren eingesetzt zwischen der ersten Funkstation und der Weiterleitungs-Funkstation, bei welchem die Weiterleitungs-Funkstation die Nachricht speichert und nach Empfang einer von der ersten Funkstation zu Zwecken des zweiten ARQ-Verfahrens erzeugten Bestätigungsnachricht löscht.

Bei dem zweiten Verfahren, bei welchem eine Nachricht per Funk von einer zweiten zu einer ersten Funkstation übertragen wird, handelt es sich um das Pendant in Bezug auf die andere Übertragungsrichtung zu dem oben beschriebenen erfindungsgemäßen Verfahren, bei welchem eine Nachricht von der ersten an die zweite Funkstation übertragen wird. Oben stehende Erläuterungen bezüglich des ersten erfindungsgemäßen Verfahrens sind daher auch auf das zweite Verfahren übertragbar.

In Weiterbildung der Erfindung wird nach jeder einzelnen erfolgreichen Übertragung der Nachricht über einen Sprung mit einer Weiterleitungs-Fuhkstation als Empfänger-Funkstation von der jeweiligen Empfänger-Funkstation des Sprungs eine Bestätigungsnachricht zu Zwecken des ersten ARQ-Verfahrens erzeugt und zu der jeweiligen Sender-Funkstation des Sprungs gesendet. Weiterhin wird von der ersten Funkstation nach dem Empfang der Nachricht eine Bestätigungsnachricht zu Zwecken des zweiten ARQ-Verfahrens erzeugt und zu der jeweiligen Sender-Funkstation des Sprungs gesendet.

Vorteilhaft ist es, wenn die von der ersten Funkstation zu Zwecken des zweiten ARQ-Verfahrens erzeugte Bestätigungsnachricht von der ersten Funkstation an die Weiterleitungs-Funkstation gesendet oder durch eine oder mehrere weitere Weiterleitungs-Funkstationen an die der zweiten Funkstation benachbarte Weiterleitungs-Funkstation weitergeleitet wird. Die von der ersten Funkstation erzeugte und gesendete Bestätigungsnachricht des zweiten ARQ-Verfahrens ist somit für die der zweiten Funkstation benachbarte Weiterleitungs-Funkstation bestimmt, abhängig von der Ausgestaltung des Pfades zwischen der ersten und der zweiten Funkstation wird die Bestätigungsnachricht entweder direkt von der ersten Funkstation an die der zweiten Funkstation benachbarte Weiterleitungs-Funkstation gesendet, oder gemäß diesem Pfad über eine oder mehrere weitere Weiterleitungs-Funkstationen.

Insbesondere ist es vorteilhaft, wenn es sich bei der zweiten Funkstation um eine mobile Teilnehmerstation und bei der ersten und der der zweiten Funkstation benachbarten Weiterleitungs-Funkstation um stationäre netzseitige Funkstationen handelt. Die Funkstationen können insbesondere Bestandteil eines lokalen Funkkommunikationssystems, zum Beispiel nach dem Standard WLAN 802.11, sein.

Um den Einsatz der beiden ARQ-Verfahren effizient zu gestalten, ist es vorteilhaft, bei einer Mehrzahl von zu übertragenden Nachrichten für die Nachrichten im Rahmen des ersten ARQ-Verfahrens die gleichen Sequenznummern zu verwenden wie im Rahmen des zweiten ARQ-Verfahrens.

Die erfindungsgemäße Funkstation zur Versendung einer über mehrere Sprünge per Funk zu einer zweiten Funkstation zu übertragenden Nachricht, welche über eine der zweiten Funkstation benachbarte Weiterleitungs-Funkstation zu der zweiten Funkstation zu übertragen ist, weist auf:
- Mittel zum Durchführen eines ARQ-Verfahrens zwischen der Funkstation und der Weiterleitungs-Funkstation, bei welchem die Funkstation die Nachricht speichert und nach dem Empfang einer von der Weiterleitungs-Funkstation zu Zwecken des ARQ-Verfahrens erzeugten Bestätigungsnachricht löscht, und vorzugsweise weiterhin
- Mittel zum Durchführen eines weiteren ARQ-Verfahrens zwischen der Funkstation und der die Nachricht direkt von der Funkstation empfangenden Empfänger-Funkstation des ersten Sprungs, bei welchem die Funkstation die Nachricht speichert und nach dem Empfang einer von der Empfänger-Funkstation des ersten Sprungs zu Zwecken des weiteren ARQ-Verfahrens erzeugten Bestätigungsnachricht löscht.

Die Weiterleitungs-Funkstation zur Weiterleitung einer von einer zweiten Funkstation an die Weiterleitungs-Funkstation gesendeten und über mehrere Sprünge zu einer ersten Funkstation zu übertragenden Nachricht weist auf:
- Mittel zum Durchführen eines ARQ-Verfahrens zwischen der Weiterleitungs-Funkstation und der ersten Funkstation, bei welchem die Weiterleitungs-Funkstation die Nachricht speichert und nach dem Empfang einer von der ersten Funkstation zu Zwecken des ARQ-Verfahrens erzeugten Bestätigungsnachricht löscht, und vorzugsweise weiterhin
- Mittel zum Durchführen eines weiteren ARQ-Verfahrens zwischen der Weiterleitungs-Funkstation und der zweiten Funkstation, bei welchem die Weiterleitungs-Funkstation nach Empfang der Nachricht von der zweiten Funkstation eine Bestätigungsnachricht zu Zwecken des weiteren ARQ-Verfahrens erzeugt und an die zweite Funkstation sendet, und zwischen der Weiterleitungs-Funkstation und der Funkstation, an welche die Weiterleitungs-Funkstation die Nachricht weiterleitet, bei welchem die Weiterleitungs-Funkstation die Nachricht speichert und nach dem Empfang einer von der Funkstation, an welche die Weiterleitungs-Funkstation die Nachricht weiterleitet, zu Zwecken des weiteren ARQ-Verfahrens erzeugten Bestätigungsnachricht löscht.

Die erfindungsgemäße Funkstation und die erfindungsgemäße Weiterleitungs-Funkstation eignen sich insbesondere zur Durchführung des erfindungsgemäßen Verfahrens, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: ein Ablaufdiagramm des erfindungsgemäßen Verfahrens,
- Figur 3:: ein Schichtenmodell der Protokolle von Funkstationen.

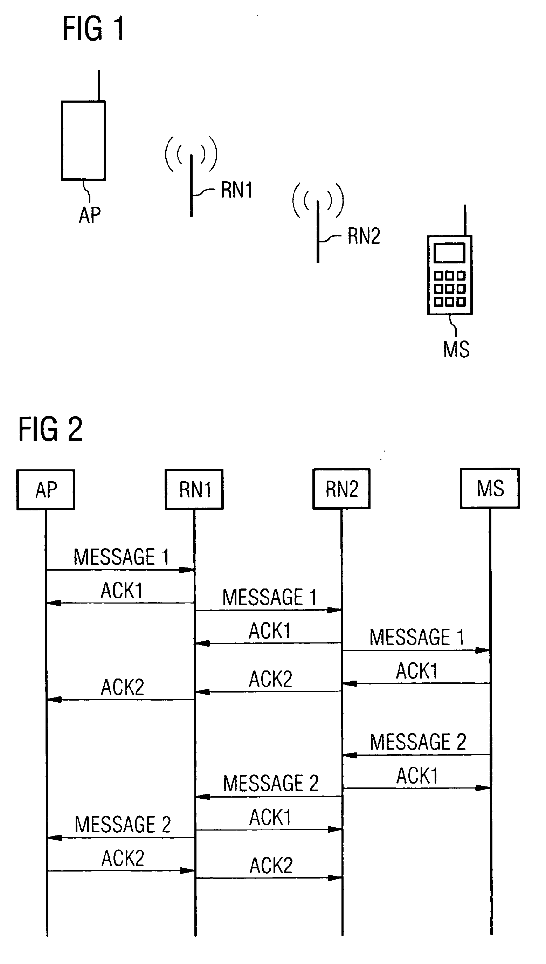

Der in Figur 1 dargestellte Ausschnitt aus einem Funkkommunikationssystem umfasst den Funkzugangspunkt AP, die netzseitigen Repeater RN1 und RN2, sowie die Teilnehmerstation MS. Der Funkzugangspunkt AP weist, in der Figur 1 nicht dargestellt, ein Anbindung an weitere Kommunikationssysteme, wie z.B. das Internet oder ein zellulares Mobilfunkkommunikationssystem, auf. Der Funkzugangspunkt AP, die Repeater RN1 und RN2, und die Teilnehmerstation MS sind Bestandteil eines lokalen Funkkommunikationssystems, sie kommunizieren untereinander z.B. unter Verwendung eines Funkstandards gemäß IEEE 802.11. Das lokale Funkkommunikationssystem kann weitere Funkstationen, insbesondere weitere netzseitige Repeater und weitere Teilnehmerstationen umfassen.

Die Funkreichweite der Funkstationen ist aufgrund ihrer begrenzten Sendeleistung eingeschränkt. Eine direkte Kommunikation ist nur zwischen Funkstationen möglich, welche sich in dem Funkabdeckungsbereich der jeweils anderen Funkstation befinden. Funkstationen, welche direkt miteinander kommunizieren können, sind benachbarte Funkstationen. In Bezug auf die Funkstationen der Figur 1 ist eine direkte Kommunikation möglich zwischen dem Funkzugangspunkt AP und dem Repeater RN1, zwischen dem Repeater RN1 und dem Repeater RN2, und zwischen dem Repeater RN2 und der Teilnehmerstation MS. Eine Nachrichtenübertragung zwischen dem Funkzugangspunkt AP und der Teilnehmerstation MS kann somit über einen über die Repeater RN1 und RN2 verlaufenden Pfad erfolgen.

Für die Nachrichtenübertragung über mehrere Sprünge wird gemäß der Erfindung ein ARQ-Verfahren eingesetzt, welches sich auf die einzelnen Sprünge zwischen benachbarten Funkstationen bezieht. Hierbei werden positive Empfangsbestätigung (ACK, Acknowledgement)eines ersten Typs versendet. Diese positiven Empfangsbestätigungen des ersten Typs zeigen an, dass die Nachrichtenübertragung über einen Sprung erfolgreich war. Bei nicht erfolgreicher Nachrichtenübertragung über einen Sprung sendet die Empfangs-Funkstation des Sprunges eine negative Empfangsbestätigung des ersten Typs (NACK, Negative Acknowledgement), woraufhin die Sende-Funkstation des Sprungs die Nachricht erneut überträgt. Die Sende-Funkstation des Sprungs speichert die Nachricht solange, bis sie eine positive Empfangsbestätigung des ersten Typs empfängt oder gegebenenfalls, bis ein Timer abgelaufen ist. Das beschriebene Single-Hop-ARQ-Verfahren bzw. ARQ-Verfahren des ersten Typs kann z.B. einem üblicherweise in zellularen Mobilfunkkommunikationssystemen verwendeten ARQ-Verfahren entsprechen, z.B. einem hybriden ARQ-Verfahren, da in diesen Systemen Nachrichten üblicherweise von einer Basisstation an eine Teilnehmerstation über einen einzigen Sprung übertragen werden, ohne dass die Nachricht über Funk weitergeleitet werden muss. Zusätzlich zu diesem Single-Hop-ARQ-Verfahren können Verfahren zur Fehlerkorrektur durch den Empfänger (FEC, Forward Error Correction) eingesetzt werden.

Zuerst wird die Nachrichtenübertragung von dem Funkzugangspunkt AP an die Teilnehmerstation MS betrachtet. Der obere Teil der Figur 2 stellt die hierzu zwischen dem Funkzugangspunkt AP und dem Repeater RN1, zwischen dem Repeater RN1 und dem Repeater RN2, sowie zwischen dem Repeater RN2 und der Teilnehmerstation versendeten Nachrichten dar. Der Ablauf der Zeit ist nach unten aufgetragen. Zu Beginn sendet der Funkzugangspunkt AP die Nachricht MESSAGE 1 an den Repeater RN1. Auf den Empfang der Nachricht MESSAGE 1 hin sendet der Repeater RN1 eine positive Empfangsbestätigung des ersten Typs ACK 1 an den Funkzugangspunkt AP. Weiterhin leitet der Repeater RN1 die Nachricht MESSAGE 1 an den Repeater RN2 weiter. Nach Empfang der Nachricht MESSAGE 1 sendet der Repeater RN2 eine positive Empfangsbestätigung des ersten Typs ACK 1 an den Repeater RN1. Weiterhin leitet der Repeater RN2 die Nachricht MESSAGE 1 an die Teilnehmerstation MS weiter. Nach Empfang der Nachricht MESSAGE 1 sendet die Teilnehmerstation MS eine positive Empfangsbestätigung des ersten Typs ACK 1 an den Repeater RN2.

Nach jeder Versendung der Nachricht MESSAGE 1 speichert die jeweilige Empfangs-Funkstation des Sprungs, d.h. der Funkzugangspunkt AP, der Repeater RN1 und der Repeater RN2, die Nachricht MESSAGE 1 so lange, bis die positive Empfangsbestätigung des ersten Typs ACK 1 empfangen wird. Wird anstelle der positive Empfangsbestätigung des ersten Typs ACK 1 eine negative Empfangsbestätigung des ersten Typs empfangen, so wird die Nachricht MESSAGE 1 erneut versendet. Auf diese Weise ist die Übertragung über die einzelnen Sprünge des Pfades zwischen dem Funkzugangspunkt AP und der Teilnehmerstation MS gesichert.

Bewegt sich die Teilnehmerstation MS während der Übertragung der Nachricht MESSAGE 1 fort, so kann es sein, dass der Pfad zwischen dem Funkzugangspunkt AP und der Teilnehmerstation MS sich ändert. Aufgrund dessen ist es möglich, dass die Teilnehmerstation MS die Nachricht MESSAGE 1 nicht empfängt und diese erneut von dem Funkzugangspunkt AP anfordert. Dieser hat die Nachricht MESSAGE 1 jedoch bereits nach Empfang der positiven Empfangsbestätigung des ersten Typs ACK 1 von dem Repeater RN1 gelöscht. Eine sofortige zweite Versendung der Nachricht MESSAGE 1 durch en Funkzugangspunkt AP ist daher nicht möglich. Um diese Schwierigkeit zu umgehen und effiziente Handover-Vorgänge in Multi-Hop Systemen zu ermöglich, werden gemäß der Erfindung zusätzlich zu den positiven Empfangsbestätigungen des ersten Typs ACK 1 positive Empfangsbestätigungen eines zweiten Typs ACK 2 verwendet. Diese zeigen an, dass die Nachricht bis zum Ende des Pfades, d.h. im konkreten Beispiel von dem Funkzugangspunkt AP zu der Teilnehmerstation MS, übertragen wurde. Die positiven Empfangsbestätigungen des zweiten Typs ACK 2 sind somit Bestandteil eines Ende-zu-Ende-ARQ-Verfahrens, während die positiven Empfangsbestätigungen des ersten Typs ACK 1 Bestandteil eines Single-Hop-ARQ-Verfahrens sind.

Die Versendung der positiven Empfangsbestätigungen des zweiten Typs ACK 2 erfolgt nicht durch die Teilnehmerstation MS, sondern durch den Repeater RN2, d.h. durch den Repeater, welcher die Nachricht an den endgültigen Empfänger weiterleitet. Dementsprechend versendet der Repeater RN2 nach Empfang der positiven Empfangsbestätigungen des ersten Typs ACK 1 von der Teilnehmerstation MS die positive Empfangsbestätigung des zweiten Typs ACK 2, welche von dem Repeater RN1 an den Funkzugangspunkt AP weitergeleitet wird. Erst nach Empfang der positiven Empfangsbestätigung des zweiten Typs ACK 2 löscht der Funkzugangspunkt AP die Nachricht MESSAGE 1 aus seinem Speicher.

Im unteren Teil von Figur 2 ist der Ablauf der Übertragung einer Nachricht MESSAGE 2 von der Teilnehmerstation MS an den Funkzugangspunkt AP dargestellt. Nach Versendung der Nachricht MESSAGE 2 durch die Teilnehmerstation MS empfängt der Repeater RN2 die Nachricht MESSAGE 2 und antwortet darauf mit der positiven Empfangsbestätigung des ersten Typs ACK 1. Weiterhin leitet er die Nachricht MESSAGE 2 an den Repeater RN1 weiter. Der Repeater RN1 antwortet mit der positiven Empfangsbestätigung des ersten Typs ACK 1 und leitet die Nachricht MESSAGE 2 an den Funkzugangspunkt AP weiter. Dieser ist der Endpunkt des Pfades von der Teilnehmerstation MS zu dem Funkzugangspunkt AP und antwortet daher durch die Versendung der positiven Empfangsbestätigung des zweiten Typs ACK 2. Zusätzlich kann gegebenenfalls auch eine Versendung einer positiven Empfangsbestätigung des ersten Typs ACK 1 durch den Funkzugangspunkt AP an den Repeater RN1 erfolgen.

Der Repeater RN1 leitet die Empfangsbestätigung des zweiten Typs ACK 2 an den Repeater RN2 weiter. Eine Weiterleitung der positiven Empfangsbestätigung des zweiten Typs ACK 2 durch den Repeater RN2 an die Teilnehmerstation MS erfolgt nicht. Vielmehr bildet der Repeater RN2 für die Nachrichtenübertragung von der Teilnehmerstation MS an den Funkzugangspunkt AP den teilnehmerseitigen Abschluss des ARQ-Verfahrens des zweiten Typs. Der Repeater RN2 speichert daher die Nachricht MESSAGE 2 solange, bis er die positive Empfangsbestätigung des zweiten Typs ACK 2 empfängt. Hingegen speichert die Teilnehmerstation die Nachricht MESSAGE 2 lediglich solange, bis sie eine positive Empfangsbestätigung des ersten Typs ACK 1 von dem Repeater RN2 empfängt. Dies hat den Vorteil, dass ein großer Speicher für die Speicherung von Nachrichten im Rahmen eines ARQ-Verfahrens bei der Teilnehmerstation MS nicht vorhanden sein muss. Ein derartiger Speicher wird bei einer Nachrichtenübertragung in Aufwärtsrichtung, d.h. in Richtung des Funkzugangspunktes AP, lediglich von dem Repeater RN2, d.h. von einer netzseitigen Einrichtung benötigt. Bei einer Nachrichtenübertragung in Abwärtsrichtung, d.h. von dem Funkzugangspunkt AP zu einer Teilnehmerstation, wird ein derartiger Speicher von dem Funkzugangspunkt AP benötigt. Die Tatsache, dass für das zweite ARQ-Verfahren kein Speicher bei der Teilnehmerstation benötigt wird, ist insbesondere deswegen vorteilhaft, weil für das zweite ARQ-Verfahren aufgrund der größeren Umlaufzeit der Nachrichten (englisch: round trip delay) eine längere Speicherung der Nachrichten nötig ist als bei dem Single-Hop-ARQ-Verfahren.

Gemäß der Erfindung werden somit zwei ARQ-Verfahren eingesetzt, wobei das erste eine sichere Übertragung über die einzelnen Hops ermöglicht, und das zweite eine sichere Ende-zu-Ende-Übertragung über den vollständigen Pfad. Die Kommunikationspartner, welche das erste ARQ-Verfahren durchführen, sind jeweils die Sende- und die Empfangsfunkstation eines Sprungs. Im konkreten Beispiel sind dies der Funkzugangspunkte AP und der Repeater RN1, der Repeater RN1 und der Repeater RN2, sowie der Repeater RN2 und die Teilnehmerstation MS. Die Kommunikationspartner, welche das zweite ARQ-Verfahren durchführen, sind nicht die ursprüngliche Sende-Funkstation und der endgültige Empfänger des Pfades, sondern bei einer Nachrichtenübertragung in Abwärtsrichtung die ursprüngliche Sendefunkstation, d.h. der Funkzugangspunkt AP, und die dem endgültigen Empfänger benachbarte Funkstation, d.h. der Repeater RN2, und bei einer Nachrichtenübertragung in Aufwärtsrichtung die der ursprünglichen Sendefunkstation benachbarte Funkstation, d.h. der Repeater RN2, und der endgültige Empfänger, d.h. der Funkzugangspunkt AP. Dies bedeutet, dass die Rolle der Teilnehmerstation als Partner des ARQ-Verfahrens bei dem zweiten ARQ-Verfahren durch einen Repeater übernommen wird. Die Teilnehmerstation wendet lediglich das erste ARQ-Verfahren an.

Die beiden ARQ-Verfahren weisen eine Kopplung auf, welche im Beispiel im Repeater RN2 realisiert ist. Dies ist ersichtlich bei der Nachrichtenübertragung in Abwärtsrichtung, bei der die Teilnehmerstation MS nach Empfang der Nachricht MESSAGE 1 eine positive Empfangsbestätigung des ersten Typs ACK 1 versendet, woraufhin der Repeater RN1 eine positive Empfangsbestätigung des zweiten Typs ACK 2 erzeugt und versendet. D.h. eine Nachrichtenversendung im Rahmen des ersten ARQ-Verfahrens löst eine Nachrichtenversendung im Rahmen des zweiten ARQ-Verfahrens aus.

Im beschriebenen Beispiel wird das erste ARQ-Verfahren für jeden einzelnen Sprung, d.h. für den Sprung zwischen Funkzugangspunkt AP und dem Repeater RN1, für den Sprung zwischen dem Repeater RN1 und dem Repeater RN2, sowie für den Sprung zwischen dem Repeater RN2 und der Teilnehmerstation MS, eingesetzt. Es ist jedoch auch möglich, dass das erste ARQ-Verfahren nur für einen Sprung oder einen Teil der Sprünge eingesetzt wird. So ist es bei ortsfesten Repeatern RN1 und RN2 und mobiler Teilnehmerstation MS vorteilhaft, nur für den Sprung zwischen der Teilnehmerstation MS und dem ihr benachbarten Repeater RN2 ein Single-Hop-ARQ-Verfahren einzusetzen, während auf der stabileren Funkstrecke zwischen den Repeatern RN1 und RN2 bzw. zwischen dem Funkzugangspunkt AP und dem Repeater RN1 auf das erste ARQ-Verfahren verzichtet wird. Hierdurch verringert sich der Signalisierungs-Overhead und die Verzögerung der Nachrichtenübertragung wird vermindert. Durch Verwendung des zweiten ARQ-Verfahrens wird weiterhin die Ende-zu-Ende Sicherheit der Nachrichtenübertragung gewährleistet.

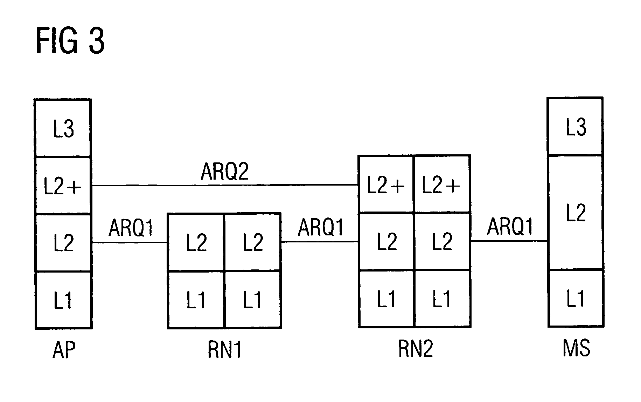

Figur 3 zeigt ein Schichtenmodell der Protokolle des Funkzugangspunktes AP, der Repeater RN1 und RN2, sowie der Teilnehmerstation MS. Die Schichten der Repeater sind zweigeteilt, da sie eine Sende- und eine Empfangsseite aufweisen, während im Rahmen der Erfindung bei dem Funkzugangspunkt AP und der Teilnehmerstation MS -abhängig von der betrachteten Übertragungsrichtung - lediglich entweder die Sende- oder die Empfangsseite von Relevanz ist. Die unterste Schicht L1 entspricht der physikalischen Schicht. Das erste ARQ-Verfahren ARQ1 wird von der zweiten Schicht L2 durchgeführt. Hieran ist, durch einen Strich zwischen den beiden Funkstationen symbolisiert, für den Hop zwischen dem Funkzugangspunkt AP und dem Repeater RN1 sowohl der Funkzugangspunkt AP als auch der Repeater RN1 beteiligt, für den Hop zwischen dem Repeater RN1 und dem Repeater RN2 sowohl der Repeater RN1 als auch der Repeater RN2, und für den Hop zwischen dem Repeater RN2 und der Teilnehmerstation MS sowohl der Repeater RN2 als auch die Teilnehmerstation MS.

Das zweite ARQ-Verfahren ARQ2 wird von einem mit L2+ gekennzeichneten Teil der zweiten Schicht L2 durchgeführt. Den Teil L2+ der zweiten Schicht L2 weisen lediglich der Funkzugangspunkt AP und der Repeater RN2 auf, durch einen Strich zwischen diesen beiden Funkstationen symbolisiert. Die Tatsache, dass die Teilnehmerstation MS den Teil L2+ der zweiten Schicht L2 nicht aufweisen muss, reduziert die Anforderungen an die Teilnehmerstation. Dies ist neben dem oben beschriebenen Hardware-Vorteil, wonach die Teilnehmerstation keinen Speicher zur Speicherung der Nachrichten für das zweite ARQ-Verfahren benötigt, ein weiterer Vorteil in Bezug auf die Ausgestaltung der Teilnehmerstationen.

Der Funkzugangspunkt AP und die Teilnehmerstation MS weisen eine dritte Schicht L3 und weitere in Figur 3 nicht dargestellte Schichten zur Verarbeitung von Daten auf, welche die beiden Repeater RN1 und RN2 nicht benötigen, da sie lediglich der Weiterleitung von Nachrichten dienen.

Das Ende-zu-Ende ARQ-Verfahren ist für die Teilnehmerstation MS nicht sichtbar, da die Teilnehmerstation MS lediglich am Single-Hop-ARQ-Verfahren teilnimmt. Für die Teilnehmerstation MS existiert somit bezüglich des von ihr verwendeten ARQ-Verfahrens kein Unterschied zwischen der direkten Anbindung an den Funkzugangspunkt AP über einen einzigen Sprung und der Anbindung über eine Mehrzahl an Sprüngen. Daher können Teilnehmerstationen in einem Multi-Hop-System zum Einsatz kommen, welche üblicherweise oder unter anderem in zellularen Mobilfunkkommunikationssystemen verwendet werden, in welchem sie direkt mit der Basisstation kommunizieren. Es ist hinsichtlich der ARQ-Verfahren keine Erweiterung der Fähigkeiten dieser Teilnehmerstationen nötig, um in einem Multi-Hop-System als ursprünglicher Sender oder endgültiger Empfänger an einer sicheren Nachrichtenübertragung teilzunehmen.

Bezüglich der Sequenznummern von Nachrichten, welche für den Einsatz von ARQ-Verfahren benötigt werden, können für das erste und das zweite ARQ-Verfahren die gleichen oder voneinander unterschiedliche Sequenznummern verwendet werden. Sind die Sequenznummern der beiden ARQ-Verfahren gleich, so erleichtert dies die Kopplung zwischen den beiden ARQ-Verfahren. Beispielsweise ist es ausreichend, wenn bei der Übertragung der Nachricht MESSAGE 2 der Figur 2 von dem Funkzugangspunkt AP nach Empfang der Nachricht MESSAGE 2 die positive Empfangsbestätigung des zweiten Typs ACK 2 gesendet wird. Die positive Empfangsbestätigung des zweiten Typs ACK 2 kann auch als positive Empfangsbestätigung des ersten ARQ-Verfahrens verwendet werden, da die Sequenznummer der Nachricht für beide ARQ-Verfahren gleich ist. Bei unterschiedlichen Sequenznummern ist in diesem Fall die Versendung zweier positiver Empfangsbestätigungen ACK 1 und ACK 2 vorteilhaft, es sei denn, dem Empfänger der positiven Empfangsbestätigung ACK 1 oder ACK 2 ist eine Umwandlung zwischen den Sequenznummern bekannt. Eine derartige Umwandlung zwischen den Sequenznummern wird auch für die Abwärtsübertragung von Nachrichten benötigt, da die Teilnehmerstation MS nach Empfang der Nachricht MESSAGE 1 lediglich eine positive Empfangsbestätigung des ersten Typs ACK 1 sendet. Bei der Verwendung von verschiedenen Sequenznummern ist eine größere Flexibilität hinsichtlich der Länge der Nachrichten möglich, die Nachrichtenlänge des ersten ARQ-Verfahrens kann von der Nachrichtenlänge des zweiten ARQ-Verfahrens abweichen.

Es kann ein Timer verwendet werden, nach dessen Ablauf, d.h. nach dessen Erreichen eines Maximalwertes, eine Nachricht nicht weitergeleitet, sondern verworfen wird. Der Timer wird bei jeder Weiterleitung der Nachricht sowie pro Zeiteinheit der Speicherung der Nachricht um den Wert 1 erhöht. Stellt ein Repeater fest, dass durch die Weiterleitung der Nachricht durch ihn der Maximalwert des Timers überschritten würde, so leitet er die Nachricht nicht weiter, sondern verwirft sie.

Der Maximalwert wird vorteilhafterweise von dem Ende-zu-Ende-ARQ-Verfahren bestimmt und an das Single-Hop-ARQ-Verfahren zusammen mit der Nachricht weitergegeben, so dass für die Ende-zu-Ende-Übertragung und für die Übertragung über die einzelnen Sprünge der gleiche Maximalwert des Timers verwendet wird. Auf diese Weise wird eine Nachricht von dem ersten und dem zweiten ARQ-Verfahren gleichzeitig verworfen, so dass der Fall nicht auftritt, dass die Partner des Ende-zu-Ende-ARQ-Verfahren eine Nachricht aufgrund Timer-Ablaufs bereits als nicht erfolgreich übertragen einstufen, während von dem Single-Hop-ARQ-Verfahren noch Übertragungen der Nachricht über einzelne Sprünge erfolgen.

Vorteilhaft ist, dass die beiden ARQ-Verfahren unabhängig voneinander den jeweiligen Übertragungsbedingungen angepasst werden können. Bei der Übertragung zwischen dem Funkzugangspunkt und einem Repeater, sowie zwischen einzelnen Repeatern herrschen in der Regel stabile Funkausbreitungsbedingungen, insbesondere wenn es sich um stationäre Repeater handelt und eine Sichtverbindung (englisch: line of sight) zwischen den diesen Funkstationen besteht. Dies resultiert in einer niedrigeren Bitfehlerrate als bei der Funkverbindung zwischen einem Repeater und einer Teilnehmerstation, für welche u.a. aufgrund der Mobilität der Teilnehmerstation zeitlich wechselnde Funkausbreitungsbedingungen zu erwarten sind. Die Weiterentwicklung der beiden ARQ-Verfahren ist unabhängig voneinander, wodurch sich die Leistung des gesamten ARQ-Verfahrens, bestehend aus der beschriebenen Kombination der beiden einzelnen ARQ-Verfahren, erhöht.

Durch die erfindungsgemäße Verwendung zweier ARQ-Verfahren Wird eine garantierte Qualität (englisch QoS, Quality of Service) bei der Nachrichtenübertragung über mehrere Sprünge ermöglicht.

## Patentansprüche

1. Verfahren zum Übertragen einer Nachricht (MESSAGE 1) per Funk von einer ersten Funkstation (AP) zu einer zweiten Funkstation (MS) über mehrere Weiterleitungs-Funkstationen, bei dem die Nachricht (MESSAGE 1) von der ersten Funkstation (AP) über eine der zweiten Funkstation (MS) benachbarte Weiterleitungs-Funkstation (RN2), **die direkt mit der zweiten Funkstation (MS) kommuniziert**, an die zweite Funkstation (MS) übertragen wird, wobei
• ein erstes ARQ- Verfahren (ARQ 1) eingesetzt wird zwischen jeweils der Sender-Funkstation und der Empfänger- Funkstation von benachbarten Funkstationen zur Übertragung der Nachricht **(MESSAGE 1)**, bei welchem die jeweilige Sender-Funkstation die Nachricht (MESSAGE 1) speichert und sofern die Sende- Funkstation gleichzeitig eine Weiterleitungs- Funkstation ist, nach dem Empfang einer von der jeweiligen Empfänger- Funkstation zu Zwecken des ersten ARQ- Verfahrens (ARQ 1) erzeugten Bestätigungsnachricht (ACK 1) löscht, und **dadurch gekennzeichnet, dass**
• ein zweites ARQ-Verfahren (ARQ 2) eingesetzt wird zwischen der ersten Funkstation (AP) und der Weiterleitungs- Funkstation (RN2), welche direkt mit der zweiten Funkstation (MS) kommuniziert, bei welchem die erste Funkstation (AP) die Nachricht (MESSAGE 1) speichert und nach dem Empfang einer von dieser Weiterleitungs-Funkstation (RN2) zu Zwecken des zweiten ARQ- Verfahrens (ARQ 2) erzeugten Bestätigungsnachricht (ACK 2) löscht, und
eine Kopplung des ersten ARQ-Verfahrens (ARQ 1) mit dem zweiten ARQ-Verfahren (ARQ 2) existiert, wobei der Empfang der Bestätigungsnachricht (ACK 1) des ersten ARQ Verfahrens (ARQ 1) durch die der zweiten Funkstation (MS) benachbarte Weiterleitungs-Funkstation (RN2), welche direkt mit der zweiten Funkstation (MS) kommuniziert, die Erzeugung einer Bestätigungsnachricht (ACK 2) des zweiten ARQ-Verfahrens **(ARQ 2)** auslöst.
Wobei die Bestatigungsnachrichten des unten und des zweiten AKQ-Verfahrens dem korrekten Empfang des Nachricht auzeigen.

2. Verfahren nach Anspruch 1, **dadurch gekennzeichnet,**
• **dass** nach jeder einzelnen erfolgreichen Übertragung der Nachricht (MESSAGE 1) von einer Sender- Funkstation zu einer Empfängerfunkstation von der jeweiligen Empfänger-Funkstation eine Bestätigungsnachricht (ACK 1) zu Zwecken des ersten ARQ Verfahrens (ARQ 1) erzeugt und zu der jeweiligen Sender-Funkstation gesendet wird, und
• nach dem Empfang der zu Zwecken des ersten ARQ Verfahrens (ARQ 1) von der zweiten Funkstation (MS) erzeugten und gesendeten Bestätigungsnachricht (ACK 1) durch die Weiterleitungs- Funkstation (RN2), welche direkt mit der zweiten Funkstation (MS) kommuniziert, von dieser Weiterleitungs- Funkstation (RN2) eine Bestätigungsnachricht (ACK 2) zu Zwecken des zweiten ARQ- Verfahrens (ARQ 2) erzeugt und gesendet wird.

3. Verfahren nach Anspruch 2, **dadurch gekennzeichnet, dass** die von der Weiterleitungs-Funkstation (RN2), welche direkt mit der zweiten Funkstation (MS) kommuniziert , zu Zwecken des zweiten ARQ- Verfahrens (ARQ 2) erzeugte Bestätigungsnachricht (ACK 2) durch eine oder mehrere weitere Weiterleitungs-Funkstationen (RN1) an die erste Funkstation (AP) weitergeleitet wird.

4. Verfahren nach einem der Ansprüche 1 bis 3, **dadurch gekennzeichnet, dass** es sich bei der zweiten Funkstation (MS) um eine mobile Teilnehmerstation und bei der ersten Funkstation (AP) und der Weiterleitungs- Funkstation (RN2), die direkt mit der zweiten Funkstation (MS) kommuniziert , um stationäre netzseitige Funkstationen handelt.

5. Verfahren nach einem der Ansprüche 1 bis 4, **dadurch gekennzeichnet, dass** bei Übertragung mehrerer Nachrichten im Rahmen des ersten ARQ-Verfahrens (ARQ 1) und des zweiten ARQ- Verfahrens (ARQ 2) gleiche Sequenznummern für die Nachrichten verwendet werden.

6. Funkzugangspunkt (AP) zur Versendung einer über mehrere Weiterleitungs-Funkstationen per Funk zu einer Teilnehmerstation (MS) zu übertragenden Nachricht (MESSAGE 1), welche über eine der Teilnehmerstation (MS) benachbarte Weiterleitungs- Funkstation (RN2), die direkt mit der Teilnehmerstation (MS) kommuniziert, zu der Teilnehmerstation (MS) zu übertragen ist, wobei
• ein erstes ARQ-Verfahren (ARQ 1) eingesetzt wird zwischen dem Funkzugangspunkt und der benachbarten Weiterleitungs- Funkstation, die direkt mit dem Funkzugangspunkt (AP) kommuniziert, bei welchem der Funkzugangspunkt (AP) die Nachricht (MESSAGE 1) speichert, und **dadurch gekennzeichnet, dass**
• ein zweites ARQ-Verfahren (ARQ 2) eingesetzt wird zwischen dem Funkzugangspunkt (AP) und der, der Teilnehmerstation (MS) benachbarten Weiterleitungs- Funkstation (RN2), welche direkt mit der Teilnehmerstation (MS) kommuniziert, bei welchem der Funkzugangspunkt (AP) die Nachricht (MESSAGE 1) nach dem Empfang einer von der Teilnehmerstation (MS) benachbarten Weiterleitungs-Funkstation (RN2), welche direkt mit der Teilnehmerstation (MS) kommuniziert, zu Zwecken des zweiten ARQ-Verfahrens (ARQ 2) erzeugten Bestätigungsnachricht (ACK 2) löscht, und
eine Kopplung des ersten ARQ-Verfahrens (ARQ 1) mit dem zweiten ARQ-Verfahren (ARQ 2) existiert, wobei der Empfang der von der Teilnehmerstation gesendeten Bestätigungsnachricht (ACK 1) des ersten ARQ- Verfahrens (ARQ 1) durch die der Teilnehmerstation (MS) benachbarten Weiterleitungs-Funk Station (RN2), die direkt mit der Teilnehmerstation (MS) kommuniziert , die Erzeugung einer Bestätigungsnachricht (ACK 2) des zweiten ARQ-Verfahrens (ARQ 2) auslöst,
wobei die Bestätigungsnachrichten des ersten und des zweiten ARQ-Verfahrens den korrekten Empfang der Nachricht auzeigen.

7. Weiterleitungs- Funkstation (RN2) zur Weiterleitung einer von einer ersten Funkstation (AP) an eine zweite Funkstation (MS) gesendeten und über mehrere Weiterleitungs- Funkstationen zu übertragenden Nachricht (MESSAGE 1), **dadurch gekennzeichnet, dass** die Weiterleitungs-Funkstation (RN2) zur zweiten Funkstation (MS) benachbart ist und direkt mit dieser kommuniziert und derart ausgebildet ist, dass das Verfahren nach einem der Ansprüche 1 bis 5 durchführbar ist.

## Claims

1. Method for transmitting a message (MESSAGE 1) by radio from a first radio station (AP) to a second radio station (MS) via a plurality of forwarding radio stations, in which method the message (MESSAGE 1) is transmitted from the first radio station (AP) to the second radio station (MS) via a forwarding radio station (RN2) adjacent to, **and in direct communication with**, the second radio station (MS), wherein
• a first ARQ method (ARQ 1) is used between the sender radio station and the receiver radio station of each pair of adjacent radio stations for the purpose of transmitting the message (**MESSAGE 1**), in which method the respective sender radio station stores the message (MESSAGE 1) and, if the send radio station is simultaneously a forwarding radio station, deletes it after receiving an acknowledgement message (ACK 1) generated by the respective receiver radio station for the purpose of the first ARQ method (ARQ 1), and **characterized in that**
• a second ARQ method (ARQ 2) is used between the first radio station (AP) and the forwarding radio station (RN2) **in direct communication with the second radio station (MS)**, in which method the first radio station (AP) stores the message (MESSAGE 1) and deletes it after receiving an acknowledgement message (ACK 2) generated by **this** forwarding radio station (RN2) for the purpose of the second ARQ method (ARQ 2), and
there is a link between the first ARQ method (ARQ 1) and the second ARQ method (ARQ 2), wherein the receipt of the acknowledgement message (ACK 1) for the first ARQ method (ARQ 1) by the forwarding **radio station (RN2)** adjacent to, **and in direct communication with**, the second radio station **(MS)** initiates generation of an acknowledgement message (ACK 2) for the second ARQ method (**ARQ 2**),
wherein the acknowledgement messages for the first ARQ method and the second ARQ method indicate correct receipt of the message.

2. Method according to claim 1, **characterized in that**
• after each individual successful transmission of the message (MESSAGE 1) from a sender radio station to a receiver radio station, the respective receiver radio station generates an acknowledgement message (ACK 1) for the purpose of the first ARQ method (ARQ 1) and sends it to the respective sender radio station, and
• after the forwarding radio station (RN2) **in direct communication with the second radio station (MS)** receives the acknowledgement message (ACK 1) generated and sent by the second radio station (MS) for the purpose of the first ARQ method (ARQ 1), **this** forwarding radio station (RN2) generates and sends an acknowledgement message (ACK 2) for the purpose of the second ARQ method (ARQ 2).

3. Method according to claim 2, **characterized in that** the acknowledgement message (ACK 2) generated for the purpose of the second ARQ method (ARQ 2) by the forwarding radio station (RN2) **in direct communication with the second radio station (MS)** is forwarded by one or more further forwarding radio stations (RN1) to the first radio station (AP).

4. Method according to any of claims 1 to 3, **characterized in that** the second radio station (MS) is a mobile user station and the first radio station (AP) and the forwarding radio station (RN2) which is **in direct communication with the second radio station (MS)** are stationary, network-based radio stations.

5. Method according to any of claims 1 to 4, **characterized in that** when transmitting a plurality of messages, the same sequence numbers are used for the messages in the first ARQ method (ARQ 1) and in the second ARQ method (ARQ 2).

6. Wireless access point (AP) for sending a message (MESSAGE 1) to be transmitted by radio to a user station (MS) via a plurality of forwarding radio stations, which message shall be transmitted to the user station (MS) via a forwarding radio station (RN2) adjacent to, **and in direct communication with**, the user station (MS), wherein
• a first ARQ method (ARQ 1) is used between the wireless access point and the adjacent forwarding radio station **which is in direct communication with the wireless access point (AP),** in which method the wireless access point **(AP)** stores the message (MESSAGE 1), **and characterized in that**
• a second ARQ method (ARQ 2) is used between the wireless access point (AP) and the forwarding radio station (RN2) adjacent to, **and in direct communication with**, the user station (MS), in which method the wireless access point (AP) deletes the message (MESSAGE 1) after receiving an acknowledgement message (ACK 2) generated for the purpose of the second ARQ method **(ARQ 2)** by the forwarding radio station (RN2) adjacent to, **and in direct communication with**, the user station (MS), and
there is a link between the first ARQ method (ARQ 1) and the second ARQ method (ARQ 2), wherein the receipt of the acknowledgement message (ACK 1) for the first ARQ method (ARQ 1) sent by the user station by the forwarding radio station (**RN2**) adjacent to, **and in direct communication with,** the user station (MS) initiates generation of an acknowledgement message (ACK 2) for the second ARQ method (**ARQ 2**),
wherein the acknowledgement messages for the first ARQ method and the second ARQ method indicate correct receipt of the message.

7. Forwarding radio station (RN2) for forwarding a message (MESSAGE 1) sent from a first radio station (AP) to a second radio station (MS) and to be transmitted via a plurality of forwarding radio stations, **characterized in that** the forwarding radio station (RN2) **is adjacent to, and in direct communication with, the second radio station (MS)**, and is designed such that the method according to any of claims 1 to 5 can be implemented.

## Revendications

1. Procédé de transmission d'un message (MESSAGE 1) par radio d'une première station radio (AP) vers une deuxième station radio (MS) via plusieurs stations radio de retransmission, dans lequel le message (MESSAGE 1) est transmis à la deuxième station radio (MS) par la première station radio (AP) via une station radio de retransmission (RN2) voisine de la deuxième station radio (MS) et qui communique directement avec la deuxième station radio (MS),
- un premier procédé ARQ (ARQ 1) étant mis en oeuvre entre respectivement la station radio émettrice et la station radio réceptrice de stations radio voisines pour la transmission du message (MESSAGE 1), dans lequel la station radio émettrice respective stocke le message (MESSAGE 1) et, dans la mesure où la station radio émettrice est en même temps une station radio de retransmission, l'efface après la réception d'un message de confirmation (ACK 1) généré par la station radio réceptrice respective aux fins du premier procédé ARQ (ARQ 1), et **caractérisé en ce que** :
- un deuxième procédé ARQ (ARQ 2) est mis en oeuvre entre la première station radio (AP) et la station radio de retransmission (RN2) qui communique directement avec la deuxième station radio (MS), dans lequel la première station radio (AP) stocke le message (MESSAGE 1) et l'efface après la réception d'un message de confirmation (ACK 2) généré par cette station radio de retransmission (RN2) aux fins du deuxième procédé ARQ (ARQ 2), et
- il existe un couplage du premier procédé ARQ (ARQ 1) avec le deuxième procédé ARQ (ARQ 2), la réception du message de confirmation (ACK 1) du premier procédé ARQ (ARQ 1) par la station radio de retransmission (RN2) voisine de la deuxième station radio (MS) et qui communique directement avec la deuxième station radio (MS) déclenchant la génération d'un message de confirmation (ACK 2) du deuxième procédé ARQ (ARQ 2), les messages de confirmation du premier et du deuxième procédé ARQ indiquant la réception correcte du message.

2. Procédé selon la revendication 1, **caractérisé en ce que** :
- après chaque transmission individuelle réussie du message (MESSAGE 1) d'une station radio émettrice vers une station radio réceptrice, la station radio réceptrice respective génère un message de confirmation (ACK 1) aux fins du premier procédé ARQ (ARQ 1) et l'envoie à la station radio émettrice respective et
- après la réception du message de confirmation (ACK 1) généré et émis par la deuxième station radio (MS) aux fins du premier procédé ARQ (ARQ 1) par la station radio de retransmission (RN2) qui communique directement avec la deuxième station radio (MS), cette station radio de retransmission (RN2) génère et envoie un message de confirmation (ACK 2) aux fins du deuxième procédé ARQ (ARQ 2).

3. Procédé selon la revendication 2, **caractérisé en ce que** le message de confirmation (ACK 2) généré aux fins du deuxième procédé ARQ (ARQ 2) par la station radio de retransmission (RN2) qui communique directement avec la deuxième station radio (MS) est retransmis par une ou plusieurs autres stations radio de retransmission (RN1) à la première station radio (AP).

4. Procédé selon l'une des revendications 1 à 3, **caractérisé en ce que** la deuxième station radio (MS) est une station d'abonné mobile et la première station radio (AP) et la station radio de retransmission (RN2) qui communique directement avec la deuxième station radio (MS) sont des stations radio stationnaires côté réseau.

5. Procédé selon l'une des revendications 1 à 4, **caractérisé en ce que**, en cas de transmission de plusieurs messages dans le cadre du premier procédé ARQ (ARQ 1) et du deuxième procédé ARQ (ARQ 2), de mêmes numéros de séquence sont utilisés pour les messages.

6. Point d'accès radio (AP) pour envoyer un message (MESSAGE 1) à transmettre par radio à une station d'abonné (MS) via plusieurs stations radio de retransmission, lequel message doit être transmis à la station d'abonné (MS) via une station radio de retransmission (RN2) voisine de la station d'abonné (MS) et qui communique directement avec la station d'abonné (MS),
- un premier procédé ARQ (ARQ 1) étant mis en oeuvre entre le point d'accès radio et la station radio de retransmission voisine qui communique directement avec le point d'accès radio (AP), dans lequel le point d'accès radio (AP) stocke le message (MESSAGE 1), et **caractérisé en ce que** :
- un deuxième procédé ARQ (ARQ 2) est mis en oeuvre entre le point d'accès radio (AP) et la station radio de retransmission (RN2) voisine de la station d'abonné (MS) et qui communique directement avec la station d'abonné (MS), dans lequel le point d'accès radio (AP) efface le message (MESSAGE 1) après la réception d'un message de confirmation (ACK 2) généré aux fins du deuxième procédé ARQ (ARQ 2) par la station radio de retransmission (RN2) voisine de la station d'abonné (MS) et qui communique directement avec la station d'abonné (MS) et
- il existe un couplage du premier procédé ARQ (ARQ 1) avec le deuxième procédé ARQ (ARQ 2), la réception, par la station radio de retransmission (RN2) voisine de la station d'abonné (MS) et qui communique directement avec la station d'abonné (MS), du message de confirmation (ACK 1) du premier procédé ARQ (ARQ 1) émis par la station d'abonné (MS)déclenchant la génération d'un message de confirmation (ACK 2) du deuxième procédé ARQ (ARQ 2),
les messages de confirmation du premier et du deuxième procédé ARQ indiquant la réception correcte du message.

7. Station radio de retransmission (RN2) pour retransmettre un message (MESSAGE 1) envoyé par une première station radio (AP) à une deuxième station radio (MS) et à transmettre via plusieurs stations radio de retransmission, **caractérisée en ce que** la station radio de retransmission (RN2) est voisine de la deuxième station radio (MS) et communique directement avec celle-ci et est réalisée de manière telle que le procédé selon l'une des revendications 1 à 5 peut être exécuté.
